# EUROPEAN PATENT SPECIFICATION

(11) **EP 0 802 110 B1**
(45) Date of publication and mention of the grant of the patent: **18.09.2002**
(21) Application number: 97104520.8
(22) Date of filing: 17.03.1997
(51) Int. Cl.: B62M 23/02, B62M 11/04

(54) **Bicycle with assist motor**
Fahrrad mit Hilfsmotor
Bicyclette avec moteur auxiliaire

(30) Priority: 17.04.1996 JP 9571196
(43) Date of publication of application: 22.10.1997
(73) Proprietor: HONDA GIKEN KOGYO KABUSHIKI KAISHA, Minato-ku Tokyo (JP)
(72) Inventor: Moriiwa, Takehito, K. K. Honda Gijutsu Kenkyusho, Wako-shi, Saitama (JP); Igarashi, Masashi, K. K. Honda Gijutsu Kenkyusho, Wako-shi, Saitama (JP); Yahagi, Kunio, c/o K. K. Honda Gijutsu Kenkyusho, Wako-shi, Saitama (JP)
(74) Representative: Liska, Horst, Dr.-Ing.

(56) References cited:
- DE-A- 2 245 767
- US-A- 5 076 386

## Description

### Detailed Description of the Invention

### Technical Field of the Invention

The present invention relates to a bicycle with an assist motor according to the preamble of claim 1.

### Related Art

The bicycle with an assist motor of this type is known, for example, from Japanese Patent Laid-open Nos. Hei 7-40878 and Sho 58-89483.

### Problem to be Solved by the Invention

In the bicycle with an assist motor described in the above document, Japanese Patent Laid-open No. Hei 7-40878, an output shaft of an assist motor is disposed in the direction perpendicular to a crank shaft disposed in the width direction of a vehicular body, and therefore, there arises a problem that a power unit including the assist motor becomes larger in size.

In the bicycle with an assist motor described in the above document, Japanese Patent Laid-open No. Sho 58-89483, an output shaft of an assist motor is disposed in the width direction of a vehicular body, that is, in parallel to a crank shaft, but a power transmission mechanism for transmitting a torque from the assist motor to a chain is disposed within a rotating plane of the chain disposed on side of a vehicular body in the width direction, and therefore, there arises a problem that it is difficult to ensure a space for layout of the power transmission mechanism.

US-A-5 076 386 discloses a bicycle with an assist motor in which a torque of a crankshaft disposed in the width direction of a vehicular body and rotated by crank pedals is transmitted to a rear wheel via a chain disposed on one side of the vehicular body in the width direction, and a torque of an assist motor is transmitted to the chain via a power transmission mechanism, wherein an output shaft of the assist motor is disposed in the width direction of the vehicular body. However, the rotating plane of the chain is penetrated by a shaft supporting a gear and an inertial type engagement/disengagement mechanism and therefore the chain interferes with parts of the power transmission mechanism. Therefore there is a possibility that the power transmission mechanism could be damaged when the chain runs out of engagement with corresponding sprockets.

It is therefore an object of the invention to provide a bicycle with an assist motor which enables a compact layout of a power transmission mechanism for transmitting a torque from an assist motor to a chain and which prevents interference of a chain with the power transmission mechanism.

In order to achieve the above-mentioned object, the present invention proposes a bicycle with an assist motor according to claim 1.

### Effect of the Invention

As described above, according to the present invention, since the output shaft of the assist motor is disposed in the width direction of the crank shaft, each of the gears constituting the power transmission mechanism for transmitting a torque from the assist motor to the chain can be composed of a spur gear or helical gear, to thereby improve the power transmission efficiency and to reduce the manufacturing cost. Moreover, since the power transmission mechanism is disposed so as to be shifted from a rotating plane of the chain disposed on one side of the vehicular body in the width direction toward the opposed side of the vehicular body in the width direction, it becomes possible to realize the reasonable layout of the power transmission mechanism without interference with the chain and hence to increase the space efficiency, and also to move the assist motor 13 at an arbitrary position around the crank shaft without a large change in the structure of the power transmission mechanism D and hence to significantly increase the degree of freedom in design.

### Preferred Embodiments of the Invention

Hereinafter, preferred embodiments of the present invention will be described with reference to the accompanying drawings.

### Brief Description of the Drawings

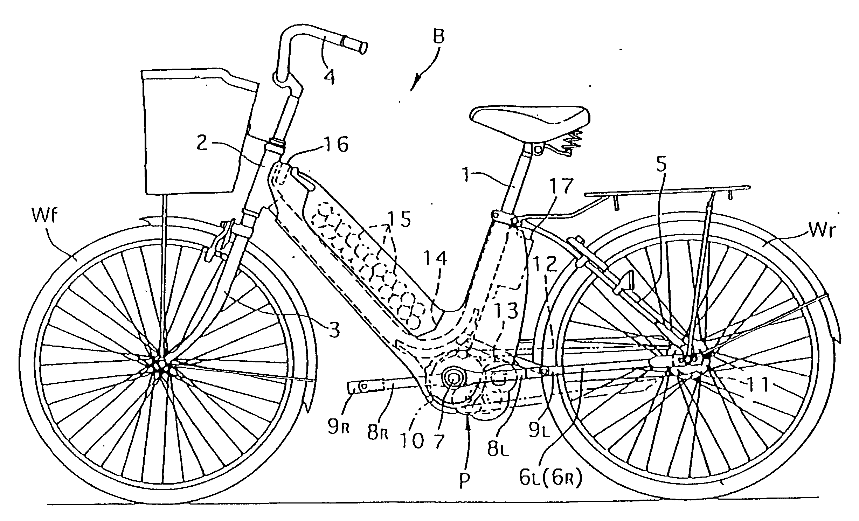

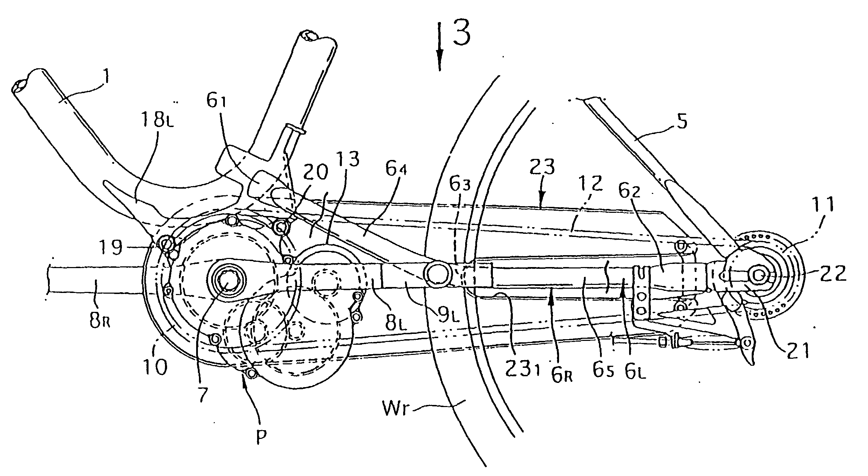

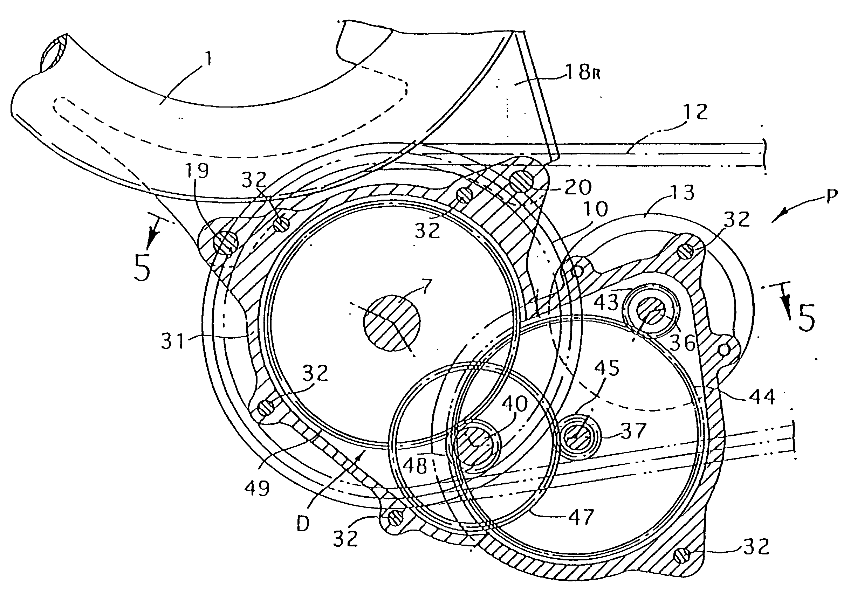

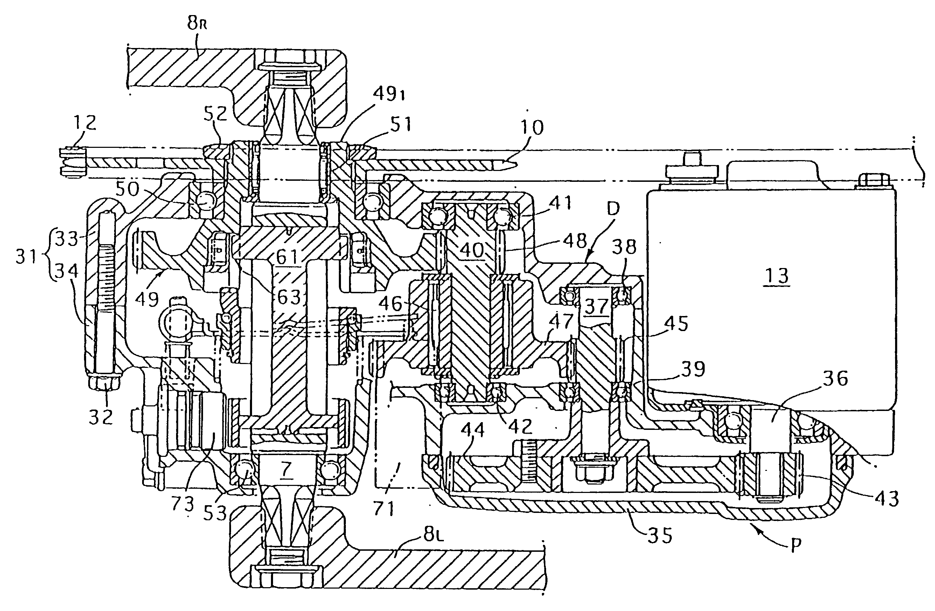

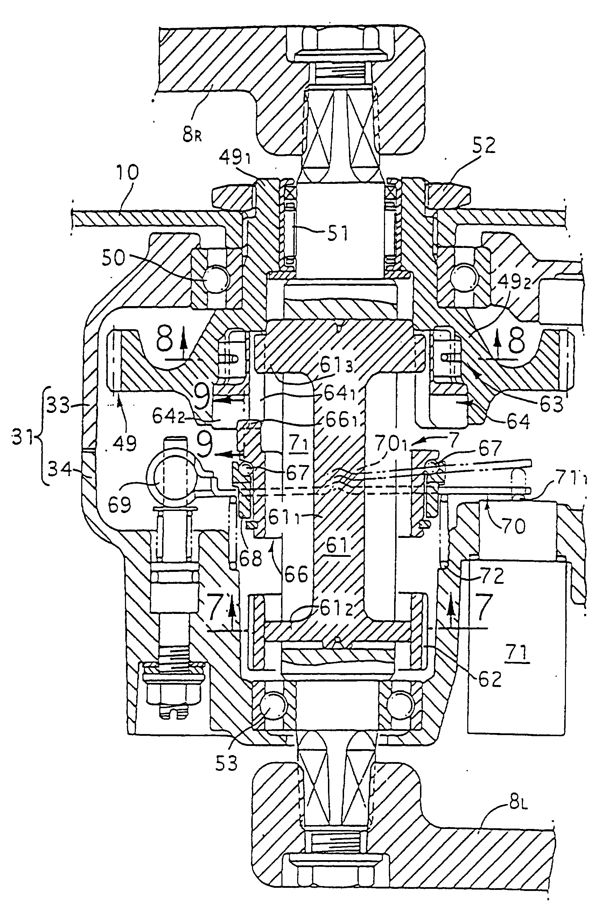

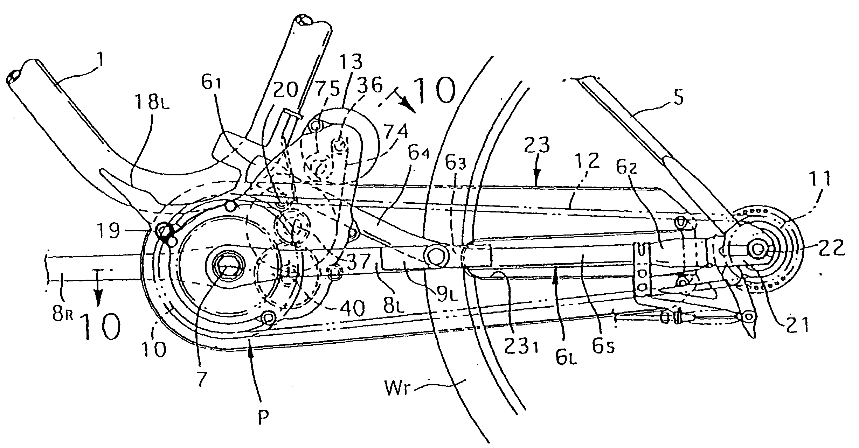

Fig. 1
   A side view showing the entire configuration of a motor with an assist motor.
Fig. 2
   An enlarged view of essential portions shown in Fig. 1.
Fig. 3
   A view seen from the direction shown by an arrow 3.
Fig. 4
   An enlarged view showing essential portions shown in Fig. 2.
Fig. 5
   A sectional view taken on line 5-5 of Fig. 4.
Fig. 6
   An enlarged view showing essential portions shown in Fig. 5.
Fig. 7
   A sectional view taken on line 7-7 of Fig. 6.
Fig. 8
   A sectional view taken on line 8-8 of Fig. 6.
Fig. 9
   A sectional view taken on line 9-9 of Fig. 6.
Fig. 10
   A view, similar to Fig. 2, showing a second embodiment of the present invention.
Fig. 11
   An enlarged sectional view taken on line 11-11 of Fig. 10.
Fig. 12
   A view, similar to Fig. 2, showing a third embodiment of the present invention.

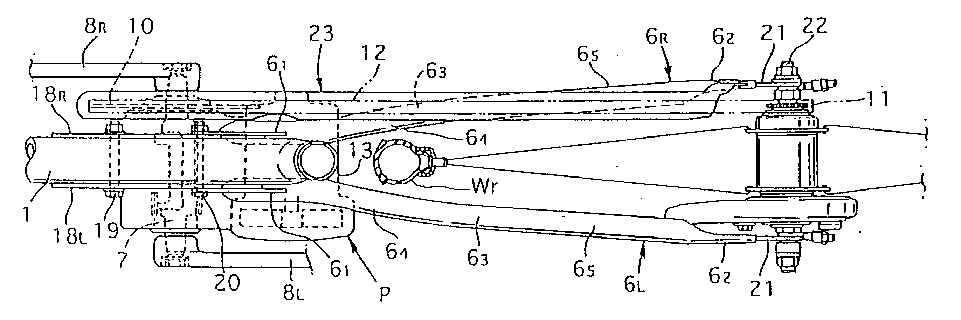

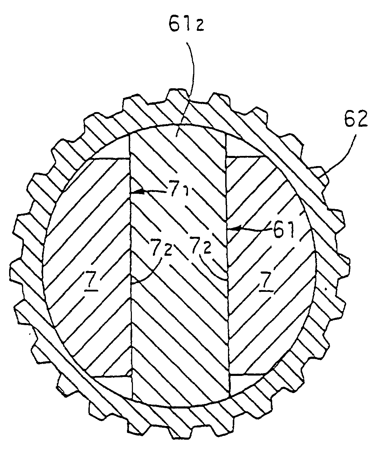

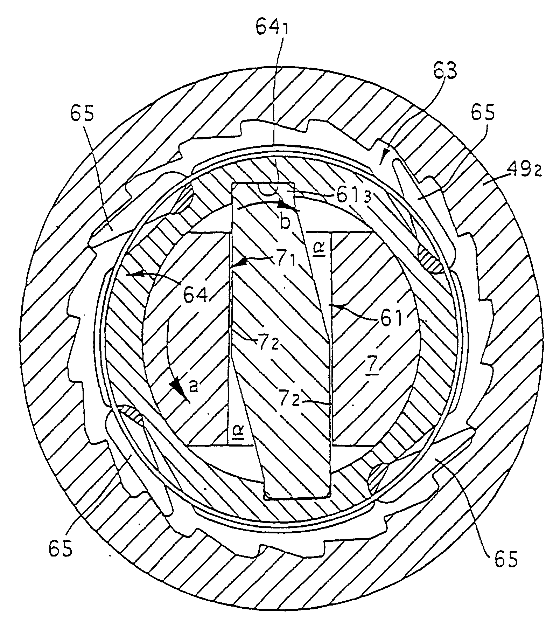

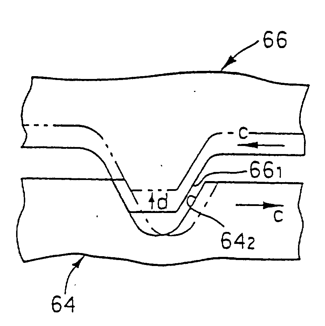

Figs. 1 to 9 show a first embodiment of the present invention, wherein Fig. 1 is a side view showing the entire configuration of a bicycle with an assist motor; Fig. 2 is an enlarged view showing essential portions shown in Fig. 1; Fig. 3 is a view seen from the direction shown by an arrow 3 of Fig. 2; Fig. 4 is an enlarged view showing essential portions shown in Fig. 2; Fig. 5 is a sectional view taken on line 5-5 of Fig. 4; Fig. 6 is an enlarged view showing essential portions shown in Fig. 5; Fig. 7 is a sectional view taken on line 7-7 of Fig. 6; Fig. 8 is a sectional view taken on line 8-8 of Fig. 6; and Fig 9 is a sectional view taken on line 9-9 of Fig. 6.

As shown in Fig. 1, a bicycle B includes a body frame 1 formed in a V-shape in a side view, and a handlebar 4 and a front wheel Wf are respectively supported at upper and lower ends of a front fork 3 pivotably supported by a head pipe 2 provided at a front end of the body frame 1. A rear wheel Wr is supported by a pair of right and left rear fork legs 6_{R}, 6_{L} reinforced by stays 5, 5 extending rearward from the vicinity of a lower end of the body frame 1. A crank shaft 7 rotatably supported at the lower end of the body frame 1 includes a pair of right and left crank arms 8_{R}, 8_{L} having at leading ends thereof crank pedals 9_{R}, 9_{L} respectively. A crank shaft sprocket 10 rotated by the crank shaft 7 is connected to a rear wheel sprocket 11 provided on an axle of the rear wheel Wr by way of a chain 12. When the crank shaft 7 is rotated by a step-on force of the crank pedals 9_{R}, 9_{L}, the rotation of the crank shaft 7 is transmitted to the rear wheel Wr via the crank shaft sprocket 10, chain 12, and rear wheel sprocket 11.

An assist motor 13 provided under the body frame 1 and connected to the crank shaft sprocket 10 serves to generate a drive force for assisting the step-on force of the crank pedals 9_{R}, 9_{L}. A battery box 14 provided on a front portion of the body frame 1 contains a running battery 15 composed a plurality of Ni-Cd cells for driving the assist motor 13, and a main switch 16 is provided at a front end of the battery box 14. A controller 17 such as an electronic control unit for controlling the driving of the assist motor 13 and a motor driver is provided at a rear portion of the body frame 1.

As can be seen from Figs. 2 and 3, a pair of right and left gussets 18_{R}, 18_{L} are welded to the lower end of the V-shaped body frame, and a front, upper portion of a power unit P including the assist motor 13 is held between these gussets 18_{R}, 18_{L} and fixed thereto by means of two bolts 19, 20.

The right and left rear fork legs 6_{R}, 6_{L} have flat portions 6₁, 6₁ at front ends thereof and flat portions 6₂, 6₂ at rear ends thereof. The front flat portions 6₁, 6₁ are connected to rear, upper portions of the gussets 18_{R}, 18_{L}, and the rear flat portions 6₂, 6₂ are connected to the axle 22 of the rear wheel Wr and the stays 5, 5 via axle supporting member 21, 21. The rear fork legs 6_{R}, 6_{L} include front half portions 6₄, 6₄, intermediate bent portions 6₃, 6₃, and rear half portions 6₅, 6₅ in the longitudinal direction. The front half portions 6₄, 6₄ extend rearward, downward of the vehicular body in a side view and also extend outward of the vehicular body in a plan view; while the rear half portions 6₅, 6₅ extend rearward of the vehicular body both in a side view and in a plan view. In Fig. 2, the left rear fork leg 6_{L} on the viewer's side of the drawing is partially cutaway so that the right rear fork leg 6_{R} on the opposed side of the drawing is viewed.

The chain 12 connecting the crank shaft sprocket 10 to the rear wheel sprocket 11 is disposed on the right side of the center of the vehicular body and has a vertical rotating plane, with the right surface of the chain 12 covered with a chain cover 23. The rear portion of the chain cover 23 has an opening portion 23₁ (see Fig. 2) extending in the longitudinal direction, and the rear half portion 6₅ of the right side rear fork portion 6_{R} extends from the inner side to the outer side of the vehicular body while passing through the rotating plane of the chain 12 and the opening portion 23₁ of the chain cover 23.

Next, the structure of the power unit P will be described in detail with reference to Figs. 4 to 9.

A housing 31 of the power unit P includes right and left housings 33, 34 connected to each other by means of a plurality of bolts 32, ..., 32, and a left cover 35 removably covering an opening portion of the left housing 34. The assist motor 13 is mounted on a right surface of a rear portion of the left housing 34 with an output shaft 36 thereof directed leftward of the vehicular body, and in such a mounted state, the assist motor 13 is positioned on the left side of the rotational plane of the chain 12 disposed on the right side of the vehicular body. A first intermediate shaft 37 disposed forward, downward of the output shaft 36 of the assist motor 13 is supported at both ends thereof by the right and left housings 33, 34 via ball bearings 38, 39 respectively. A second intermediate shaft 40 disposed forward of the first intermediate shaft 37 and rearward, downward of the crank shaft 7 is supported at both ends thereof by the right and left housings 33, 34 via ball bearings 41, 42 respectively.

A primary gear 43 fixed on the output shaft 36 of the assist motor 13 is meshed with a first intermediate gear 44 fixed on the first intermediate shaft 37; a second intermediate gear 45 formed integrally with the first intermediate shaft 37 is meshed with a third intermediate gear 47 supported by the second intermediate shaft 40 via a first one-way clutch 46 (see Fig. 5); and a fourth intermediate gear 48 formed integrally with the second intermediate shaft 40 is meshed with a final gear 49 relatively rotatably supported at a right end of the crank shaft 7. The left surfaces of the primary gear 43 and the first intermediate gear 44 face the left cover 35 removably mounted on the left housing 34.

The primary gear 43, first intermediate gear 44, second intermediate gear 45, third intermediate gear 47, fourth intermediate gear 48, and final gear 49 constitute a power transmission mechanism D. As can be seen from Fig. 5, the power transmission mechanism D is disposed on the left side of the rotating plane of the chain disposed on the right side of the vehicular body.

The final gear 49 is supported on the right housing 33 via a ball bearing 50, and the right end of the crank shaft 7 is supported at the center of the final gear 49 via a roller bearing 51. The crank shaft sprocket 10 is connected by a nut 52 around a cylindrical shaft portion 49₁ of the final gear 49 extending rightward of the vehicular body from the right housing 33. The left end of the crank shaft 7 is supported on the left housing 34 via a ball bearing 53.

Accordingly, when the assist motor 13 is rotated, a torque of the output shaft 36 of the assist motor 13 is transmitted to the crank shaft sprocket 10 via the primary gear 43, first intermediate gear 44, first intermediate shaft 37, second intermediate gear 45, third intermediate gear 47, first one-way clutch 46, second intermediate shaft 40, fourth intermediate gear 48, and final gear 49. On the other hand, when the driving of the assist motor 13 is stopped by discharge of the running battery 15 or the like, the first one-way clutch 46 idles so as not to obstruct the rotation of the crank shaft sprocket 10 due to the step-on force of the crank pedals 9_{R}, 9_{L}.

As can be seen from Figs. 6 to 8, a torsion bar 61 mounted in a slit 7₁ formed in the crank shaft 7 along the axial line has a columnar shaft portion 61₁ rotatably fitted between right and left inner wall surfaces 7₂, 7₂ of the slit 7₁ and a pair of arm portions 61₂, 61₃ projecting radially from right and left ends of the shaft portion 61₁. The left arm portion 61₂ of the torsion bar 61 is closely fitted between the right and left inner wall surfaces 7₂, 7₂ of the slit 7₁ and integrally connected to the crank shaft 7. A rotational speed detecting gear 62 is press-fitted around the outer periphery of the arm portion 61₂ and the crank shaft 7 (see Fig. 7). Thus, the left end of the torsion bar 61 and the rotational speed detecting gear 62 are integrally connected to the left end of the crank shaft 7. The right arm portion 61₃ of the torsion bar 61, which is loosely fitted between the right and left inner wall surfaces 7₂, 7₂ of the slit 7₁, has gaps α, α between the inner wall surfaces 7₂, 7₂ and the same, and accordingly, the right end of the torsion bar 61 can be torsionally deformed with respect to the left end thereof in a range of the gaps α, α (see Fig. 8). In addition, a crank shaft rotational speed sensor 73 supported on the left housing 34 is disposed opposite to the outer periphery of the rotational speed detecting gear 62 (see Fig. 5).

As can be seen from Figs. 6 to 8, a second one-way clutch 63 is disposed around the outer periphery of the right end of the crank shaft 7. The second one-way clutch 63 includes a plurality of claws 65, ..., 65 between an outer ring 49₂ formed integrally with the final gear 49 and an inner ring 64 relatively rotatably fitted around the outer periphery of the crank shaft 7, and the arm portion 61₃ at the right end of the torsion bar 61 is locked in a recess 64₁ formed in the inner periphery of the inner ring 64.

When the crank shaft 7 is normally rotated by the step-on force of the crank pedals 9_{R}, 9_{L}, the torque of the crank shaft 7 is transmitted to the crank shaft sprocket 10 via the torsion bar 61, second one-way clutch 63, and final gear 49. When the crank shaft 7 is reversely rotated by the step-on force of the crank pedals 9_{R}, 9_{L}, the second one-way clutch 63 is slipped to allow the reverse rotation of the crank shaft 7.

When the torque in the direction shown by an arrow "a" in Fig. 8 is inputted from the crank pedals 9_{R}, 9_{L} to the crank shaft 7, the inner ring 64 to which a load of the rear wheel Wr is transmitted via the cylindrical shaft portion 49₁ of the final gear 49 and the clutch claws 65, ..., 65 resists the torque in the direction shown by the arrow "a", so that the arm portion 61₃ at the right end of the torsion bar 61 is torsionally deformed in the direction shown by an arrow "b" with respect to the crank shaft 7, with a result that a relative rotation corresponding to the torque inputted to the crank shaft 7 is generated between the crank shaft 7 and the inner ring 64.

As can be seen from Fig. 6, an inner slider 66 is supported around the outer periphery of the crank shaft 7 in such a manner as not to be relatively rotatable but to be axially slidable with respect to the crank shaft 7, and an outer slider 68 is relatively rotatably supported around the outer periphery of the inner slider 66 via a plurality of balls 67. A detecting lever 70 pivotably supported at one end thereof on the left housing 34 via a supporting pin 69 is, at an input portion 70₁ thereof positioned at the intermediate portion in the longitudinal direction, brought in contact with the outer slider 68 and is also, at the other end thereof, brought in contact with a probe 71₁ of a stroke sensor 71 provided on the left housing 34. The detecting lever 70 is biased by a spring 72 contractedly provided between the left housing 34 and the same so that the input portion 70₁ is brought in elastic-contact with the outer slider 68.

As can be seen from Figs. 6 and 9, an recessed cam face 64₂ is formed in an end surface of the inner ring 64 of the second one-way clutch 63, and a projecting cam face 66₁ to be engaged with the cam face 64₂ is formed on an end surface of the inner slider 66.

Next, the function of the embodiment having the above-described configuration according to the present invention will be described.

When a driver steps on the crank pedals 9_{R}, 9_{L} for running the bicycle, the crank shaft 7 is rotated via the crank arms 8_{R}, 8_{L}, and the torque of the crank shaft 7 is transmitted from the torsion bar 61 to the rear wheel Wr via the second one-way clutch 63, final gear 49, crank shaft sprocket 10, chain 12, and rear wheel sprocket 11. At this time, the magnitude of the step-on force of the crank pedals 9_{R}, 9_{L} is detected by the stroke sensor 71.

Specifically, when the torque corresponding to the step-on force of the crank pedals 9_{R}, 9_{L} is applied to the torsion bar 61, a relative rotation corresponding to the torsional angle of the torsion bar 61 is generated between the inner ring 64 of the second one-way clutch 63 and the inner slider 66. When the arm portion 61₃ of the torsion bar 61 is torsionally deformed with respect to the crank shaft 7, the inner slider 66 supported on the crank shaft 7 in such a manner as not to be relatively rotatable but to be slidable axially with respect to the crank shaft 7 is, as shown in Fig. 9, rotated in the direction shown by an arrow "c" relative to the inner ring 64 of the second one-way clutch 63 connected to the arm portion 61₃ of the torsion bar 61.

As a result, the cam face 66₁ of the inner slider 66 is pressed to the cam face 64₂ of the inner ring 64, so that the inner slider 66 is slid against the elastic force of the spring 72 along the crank shaft 7 in the direction shown by an arrow "d". Thus, the detecting lever 70 with the input portion 70₁ pressed by the outer slider 68 slid together with the inner slider 66 is rocked around the supporting pin 69 to press the probe 71₁ of the stroke sensor 71. At this time, since the stroke of the probe 71₁ of the stroke sensor 71 is proportional to the torsional amount of the torsion bar 61, that is, the step-on force of the crank pedals 9_{R}, 9_{L}, it is possible to detect the step-on force on the basis of the output of the stroke sensor 71.

Accordingly, the controller 17 performs duty control for the driving of the assist motor 13 on the basis of the output of the stroke sensor 71 for detecting the step-on force of the crank pedals 9_{R}, 9_{L} and the output of the crank shaft rotational speed sensor 73 for detecting the rotational speed of the crank shaft 7. The duty ratio of the duty control is set so as to be increased linearly with the rotational speed of the assist motor 13 (that is, the output of the crank shaft rotational speed sensor 73), and to be increased linearly with the step-on force of the crank pedals 9_{R}, 9_{L} (that is, the output of the stroke sensor 71).

As can be seen from Figs. 4 and 5, since the assist motor 13 has the output shaft 36 disposed in the width direction of the crank shaft 7, that is, in parallel to the crank shaft 7, each of the gears constituting the power transmission mechanism D for transmitting a torque from the output shaft 36 to the crank shaft sprocket 10 can be composed of a spur gear or helical gear, to thereby improve the power transmission efficiency and to reduce the manufacturing cost. Moreover, since the power transmission mechanism D is disposed so as to be shifted leftward of the vehicular body from the rotational plane of the chain 12 disposed on the right side of the vehicular body, it becomes possible to realize the reasonable layout of the power transmission mechanism D without interference with the chain 12 and hence to increase the space efficiency, and also to move the assist motor 13 at an arbitrary position around the crank shaft 7 without a large change in the structure of the power transmission mechanism D and hence to significantly increase the degree of freedom in design.

Additionally, in this embodiment, the front half portion 6₄ of the right rear fork leg 6_{R} is connected to the vicinity of the bent portion of the lower end of the body frame 1 over the power unit P, extending downward, rearward therefrom, and reaches the rear side of the vehicular body through the upper side of the power unit P; and the rear half portion 6₅ connected to the rear portion of the front half portion 6₄ extends rearward of the vehicular body and passes through the rotating plane of the chain 12 from the inner side to the outside of the vehicular body, and accordingly, only by provision of the rear fork leg 6_{R} having a simple shape in which the front half portion 6₄ and the rear half portion 6₅ are bent at the intermediate bent portion 6₃, it is possible to avoid the interference of the rear fork leg 6_{R} with the power unit P and the chain 12. This makes it possible to obtain the rear fork leg 6_{R} excellent in strength and low in manufacturing cost, and to increase the degree of freedom in design of the power unit P.

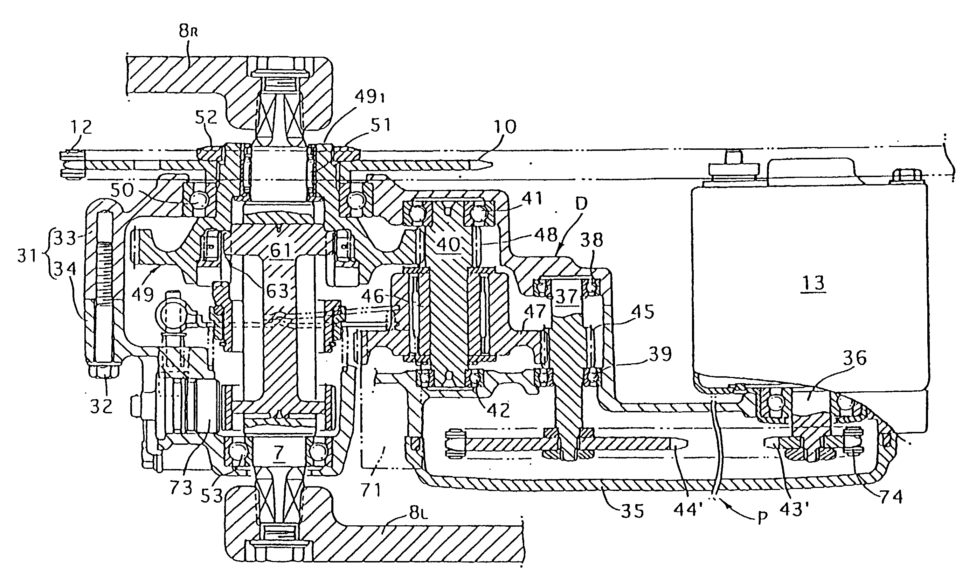

Figs. 10 and 11 show a second embodiment of the present invention, wherein Fig. 10 is similar to Fig. 2, and Fig. 11 is an enlarged sectional view taken on line 11-11 of Fig. 10.

The second embodiment is similar to the first embodiment in structure and operational effect, except for. the structure of the power transmission mechanism D for transmitting a torque from the assist motor 13 to the crank shaft sprocket 10.

The second embodiment is so configured that the assist motor 13 is positioned higher than the upper end of the chain 12 in a side view and thereby the distance between the output shaft 36 of the assist motor 13 and the first intermediate shaft 37 is increased more than that in the first embodiment. Consequently, the power transmission from the output shaft 36 of the assist motor 13 to the first intermediate shaft 37 is performed by provision of an endless chain 74 between a primary sprocket 43' provided on the output shaft 36 and a first intermediate sprocket 44' provided on the first intermediate shaft 37. A tension sprocket 75 for adjusting the tension of the endless chain 74 is brought in contact with an intermediate portion of the endless chain 74 (see Fig. 10).

In addition, in the second embodiment, the assist motor 13, which is part of the power unit P, projects upward from the rear fork legs 6_{R}, 6_{L} in a side view; however, since the main body of the power unit P (that is, the portion excluding the assist motor 13) is positioned under the rear fork legs 6_{R}, 6_{L}, the main body does not interfere with the rear fork legs 6_{R}, 6_{L}.

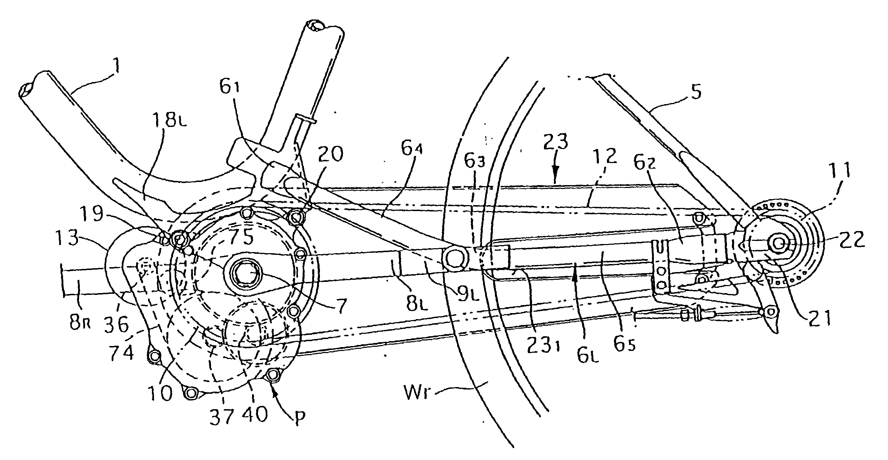

Next, a third embodiment of the present invention will be described with reference to Fig. 12.

The third embodiment is a modification of the second embodiment, in which the layout of the power transmission mechanism D is different from that of the second embodiment. Specifically, the assist motor 13 is disposed in front of the crank shaft 7; the first intermediate shaft 37 is disposed behind and under the assist motor 13; and the second intermediate shaft 40 is disposed behind the first intermediate shaft 37 and under the crank shaft 7.

The third embodiment exhibits the same operational effect as those in the first and second embodiments.

While the preferred embodiments of the present invention have been described using the specific terms, such description is for illustrative purposes only, and it is to be understood that many changes in design may be made without departing from the scope or spirit of the present invention.

To provide a bicycle B with an assist motor 13, which is capable of realizing a reasonable layout of a power transmission mechanism D for transmitting a torque from an assist motor 13 to a chain 12.

A chain 12 for transmitting a rotation of a crank shaft sprocket 10 provided at a right end of a crank shaft 7 to a rear wheel Wᵣ is disposed on the right side of a vehicular body. An assist motor 13 with an output shaft 36 disposed in parallel to the crank shaft 7 is connected to the crank shaft sprocket 10 via a power transmission mechanism.D composed of a primary gear 43, first to fourth intermediate gears 44, 45, 47 and 48, and a final gear 49. The power transmission mechanism D is positioned on the left side of a rotational plane of the chain 12, so that it is possible to realize a compact layout of the power transmission mechanism D without interference with the chain 12.

## Claims

1. A bicycle with an assist motor (13), said bicycle comprising:
- a vehicular body,
- a front which (W_{f}) and a rear wheel (Wᵣ),
- a crankshaft (7) being disposed in the width direction of said vehicular body,
- crank pedals (9_{R}, 9_{L}) disposed on said crankshaft (7) for rotating said crankshaft (7),
- a chain (12) disposed on one side of said vehicular body in its width direction, and
- a power transmission mechanism (D),
wherein a torque of said crankshaft (7) is transmitted via said chain (12) to said rear wheel (Wᵣ) and a torque of said assist motor (13) is transmitted via said power transmission mechanism (D) to said chain (12) and wherein an output shaft (36) of said assist motor (13) is disposed in the width direction of said vehicular body,
**characterized in**
**that** interconnectable housings (33, 34) are mounted on said vehicular body, wherein said crankshaft (7) is supported on said interconnectable housings (33, 34),
**that** said assist motor (13) is connected to said housings (31), and
**that** said power transmission mechanism (D) is disposed so as to be shifted out of a rotating plane of said chain (12) disposed on one side of said vehicular body in the width direction toward the opposite side of the vehicular body in the width direction and comprises a plurality of intermediate gears (44, 45, 47, 48).

2. The bicycle according to claim 1,
**characterized in**
**that** said power transmission mechanism (D) comprises a one-way clutch (46) supporting one of said intermediate gears.

3. The bicycle according to claims 1 or 2,
**characterized in**
**that** said power transmission mechanism (D) comprises a primary gear (43) fixed on said output shaft (36),
a first intermediate gear (44) fixed on a first intermediate shaft (37) meshing with said primary gear (43),
a second intermediate gear (45) formed integrally with said first intermediate shaft (37),
a third intermediate gear (47) supported by a second intermediate shaft (40) meshing with said second intermediate gear (45),
a fourth intermediate gear (48) formed integrally with said second intermediate shaft (40), and
a final gear (49) supported on one of said housings (33) and coupled to a crankshaft sprocket (10), which final gear (49) meshes with said fourth intermediate gear (48).

4. The bicycle according to claim 3,
**characterized in**
**that** said primary gear faces one (34) of said housings and that said final gear (49) faces the other one (33) of said housings which is disposed on the chain (12) side of the vehicular body.

5. The bicycle according on one of the preceding claims,
**characterized in**
**that** said plurality of intermediate gears (44, 45, 47, 48) is supported on said housings (33, 34) and each of said intermediate gears (44, 45, 47, 48) is composed of a spur gear or a helical gear.

## Patentansprüche

1. Fahrrad mit einem Hilfsmotor (13), wobei das Fahrrad umfasst:
- einen Fahrzeugkörper,
- ein Vorderrad (W_{f}) und ein Hinterrad (Wᵣ),
- eine in der Breitenrichtung des Fahrzeugkörpers angeordnete Kurbelwelle (7),
- an der Kurbelwelle (7) zur Drehung der Kurbelwelle (7) angeordnete Kurbelpedale (9_{R}, 9_{L}),
- eine an einer Seite des Fahrzeugkörpers in seiner Breitenrichtung angeordnete Kette (12), und
- einen Kraftübertragungsmechanismus (D),
wobei ein Drehmoment von der Kurbelwelle (7) über die Kette (12) zu dem Hinterrad (Wᵣ) übertragen wird und ein Drehmoment des Hilfsmotors (13) über den Kraftübertragungsmechanismus (D) zu der Kette (12) übertragen wird und wobei eine Ausgangswelle (36) des Hilfsmotors (13) in der Breitenrichtung des Fahrzeugkörpers angeordnet ist,
**dadurch gekennzeichnet,**
**dass** miteinander verbindbare Gehäuse (33, 34) an dem Fahrzeugkörper angebracht sind, wobei die Kurbelwelle (7) an den miteinander verbindbaren Gehäusen (33, 34) gelagert ist,
**dass** der Hilfsmotor (13) mit den Gehäusen (31) verbunden ist und
**dass** der Kraftübertragungsmechanismus (D) so angeordnet ist, dass er aus einer Drehebene der Kette (12), die an einer Seite des Fahrzeugkörpers in der Breitenrichtung angeordnet ist, zur gegenüberliegenden Seite des Fahrzeugkörpers in der Breitenrichtung hin verschoben ist und eine Mehrzahl von Zwischenzahnrädern (44, 45, 47, 48) umfasst.

2. Fahrrad gemäß Anspruch 1, **dadurch gekennzeichnet, dass** der Kraftübertragungsmechanismus (D) eine Einwegkupplung (46) umfasst, die eines der Zwischenzahnräder lagert.

3. Fahrrad gemäß Anspruch 1 oder 2, **dadurch gekennzeichnet, dass** der Kraftübertragungsmechanismus (D) umfasst:
ein an der Ausgangswelle (36) befestigtes primäres Zahnrad (43),
ein an einer ersten Zwischenwelle (37) befestigtes erstes Zwischenzahnrad (44), das mit dem primären Zahnrad (43) im Eingriff steht,
ein integral mit der ersten Zwischenwelle (37) ausgebildetes zweites Zwischenzahnrad (45),
ein durch eine zweite Zwischenwelle (40) gelagertes drittes Zwischenzahnrad (47), das mit dem zweiten Zwischenzahnrad (45) im Eingriff steht,
ein integral mit der zweiten Zwischenwelle (40) ausgebildetes viertes Zwischenzahnrad (48), und
ein Endzahnrad (49), das in einem der Gehäuse (33) gelagert und mit dem Kurbelwellenkettenrad (10) gekuppelt ist, wobei das Endzahnrad (49) mit dem vierten Zwischenzahnrad (48) im Eingriff steht.

4. Fahrrad gemäß Anspruch 3, **dadurch gekennzeichnet, dass** das primäre Zahnrad einem (34) der Gehäuse zugewandt ist und dass das Endzahnrad (49) dem anderen (33) der Gehäuse zugewandt ist, welches an der Seite der Kette (12) des Fahrzeugkörpers angeordnet ist.

5. Fahrrad gemäß einem der vorhergehenden Ansprüche, **dadurch gekennzeichnet, dass** die Mehrzahl von Zwischenzahnrädern (44, 45, 47, 48) an den Gehäusen (33, 34) gelagert ist und dass jedes der Zwischenzahnräder (44, 45, 47, 48) aus einem Stirnrad oder einem Schrägstirnrad besteht.

## Revendications

1. Bicyclette munie d'un moteur auxiliaire (13), ladite bicyclette comportant :
- un corps de véhicule,
- une roue avant (W_{f}) et une roue arrière (Wᵣ),
- un vilebrequin (7) disposé dans la direction de largeur dudit corps de véhicule,
- des pédales de vilebrequin (9_{R}, 9_{L}) disposées sur ledit vilebrequin (7) pour faire tourner ledit vilebrequin (7),
- une chaîne (12) disposée sur un côté dudit corps de véhicule dans sa direction de largeur, et
- un mécanisme de transmission de puissance (D),
dans laquelle un couple dudit vilebrequin (7) est transmis par ladite chaîne (12) à ladite roue arrière (Wᵣ), et un couple dudit moteur auxiliaire (13) est transmis par ledit mécanisme de transmission de puissance (D) à ladite chaîne (12), et dans laquelle un arbre de sortie (36) dudit moteur auxiliaire (13) est disposé dans la direction de largeur dudit corps de véhicule,
**caractérisée en ce que**
des boîtiers aptes à être connectés mutuellement (33, 34) sont montés sur ledit corps de véhicule, ledit vilebrequin (7) étant supporté sur lesdits boîtiers aptes à être connectés mutuellement (33, 34),
**en ce que** ledit moteur auxiliaire (13) est connecté auxdits boîtiers (31), et **en ce que** ledit mécanisme de transmission de puissance (D) est disposé de manière à être déplacé hors d'un plan de rotation de ladite chaîne (12) disposée sur un premier côté dudit corps de véhicule dans la direction de largeur vers le côté opposé du corps de véhicule dans la direction de largeur, et comporte une pluralité d'engrenages intermédiaires (44, 45, 47, 48).

2. Bicyclette selon la revendication 1, **caractérisée en ce que**
ledit mécanisme de transmission de puissance (D) comporte un embrayage unidirectionnel (46) supportant un desdits engrenages intermédiaires.

3. Bicyclette selon la revendication 1 ou 2, **caractérisée en ce que**
ledit mécanisme de transmission de puissance (D) comporte un engrenage principal (43) fixé sur ledit arbre de sortie (36),
un premier engrenage intermédiaire (44) fixé sur un premier arbre intermédiaire (37) engrenant avec ledit engrenage principal (43),
un deuxième engrenage intermédiaire (45) formé en un seul bloc avec ledit premier arbre intermédiaire (37),
un troisième engrenage intermédiaire (47) supporté par un second arbre intermédiaire (40) engrenant avec ledit deuxième engrenage intermédiaire (45),
un quatrième engrenage intermédiaire (48) formé en un seul bloc avec ledit second arbre intermédiaire (40), et
un engrenage final (49) supporté sur un desdits boîtiers (33) et accouplé à un pignon de vilebrequin (10), lequel engrenage final (49) engrène avec ledit quatrième engrenage intermédiaire (48).

4. Bicyclette selon la revendication 3, **caractérisée en ce que**
ledit engrenage principal fait face à un premier (34) desdits boîtiers, et **en ce que** ledit engrenage final (49) fait face à l'autre (33) desdits boîtiers qui est disposé du côté chaîne (12) du corps de véhicule.

5. Bicyclette selon l'une quelconque des revendications précédentes, **caractérisée en ce que**
ladite pluralité d'engrenages intermédiaire (44, 45, 47, 48) est supportée sur lesdits boîtiers (33, 34), et chacun desdits engrenages intermédiaires (44, 45, 47, 48) est constitué d'un engrenage droit ou d'un engrenage hélicoïdal.
